# EUROPÄISCHE PATENTSCHRIFT

(11) **EP 3 398 754 B1**
(45) Veröffentlichungstag und Bekanntmachung des Hinweises auf die Patenterteilung: **15.04.2020**
(21) Anmeldenummer: 17169643.8
(22) Anmeldetag: 05.05.2017
(51) Int. Cl.: B29C 65/02

(54) **ANTRIEBSANORDNUNG FÜR SCHWEISSAUTOMATEN**
DRIVE ASSEMBLY FOR AUTOMATIC WELDING MACHINES
SYSTÈME D'ENTRAÎNEMENT POUR MACHINES AUTOMATIQUES DE SOUDAGE

(43) Veröffentlichungstag der Anmeldung: 07.11.2018
(73) Patentinhaber: Leister Technologies AG, 6056 Kägiswil (CH)
(72) Erfinder: Sigrist, Flavio, 6072 Sachseln (CH); Gisler, Lukas, 6055 Alpnach Dorf (CH)
(74) Vertreter: Klocke, Peter

(56) Entgegenhaltungen:
- DE-U1- 7 700 687
- DE-U1- 8 529 090
- DE-U1- 8 805 783
- US-A1- 2014 227 044

## Beschreibung

Die Erfindung betrifft eine Antriebsanordnung zum Antrieb eines Schweißautomaten, der für ein randseitiges Verbinden von Dichtungsbahnen ausgebildet ist, wobei der Schweißautomat mindestens zwei einander vertikal gegenüberliegende Anpress-/Vorschubrollen, einen elektrischen Antriebsmotor für mindestens eine der Anpress-/Vorschubrollen und ein dem Antriebsmotor nachgeschaltetes Übertragungsgetriebe aufweist, und eine obere Anpress-/Vorschubrolle um eine obere Rollendrehachse drehbar an einem Spannarm des Schweißautomaten und eine untere Anpress-/Vorschubrolle um eine untere Rollendrehachse drehbar an einem Rahmengestell des Schweißautomaten angeordnet ist, wobei der Spannarm um eine Spannarmachse schwenkbar an dem Rahmengestell des Schweißautomaten gelagert ist, und das Rahmengestell von mindestens zwei Fahrrollen getragen ist, der Antriebsmotor und das Übertragungsgetriebe starr an dem Rahmengestell befestigt sind, wobei der Antriebsmotor einen um eine überstehende Rotationswelle rotierenden Motoranker und das Übertragungsgetriebe eine drehbare vorstehende Antriebswelle sowie eine drehbare vorstehende Abtriebswelle aufweist, und wobei die Spannarmachse, Rollendrehachse, die Rotationswelle, die Antriebswelle und die Abtriebswelle parallel zueinander angeordnet sind.

Die Erfindung betrifft außerdem einen Schweißautomaten zum randseitigen Verbinden von Dichtungsbahnen aus thermoplastischen Materialien, mit mindestens einer Vorschubrolle, einem elektrischen Antriebsmotor für die Vorschubrolle und einem dem Antriebsmotor nachgeschalten Übertragungsgetriebe, wobei die Vorschubrolle um eine Rollendrehachse drehbar an einem Spannarm des Schweißautomaten angeordnet und der Spannarm um eine Spannarmachse schwenkbar an einem von Fahrrollen getragenen Rahmengestell des Schweißautomaten gelagert ist.

Antriebsanordnungen zum Antrieb eines gattungsgemäßen Schweißautomaten sind aus dem Stand der Technik in verschiedenen Ausführungsformen bekannt. Dabei sind der Antriebsmotor und das Übertragungsgetriebe üblicherweise starr an dem Rahmengestell befestigt, wobei der Antriebsmotor einen um eine Rotationswelle rotierenden Motoranker und das Übertragungsgetriebe eine drehbare vorstehende Antriebswelle sowie eine drehbare vorstehende Abtriebswelle aufweist. In der Regel erstrecken sich die Spannarmachse des Spannarms, die Rollendrehachse der oberen und der unteren untere Anpress-/Vorschubrolle, die Rotationswelle des Motorankers, sowie die Antriebswelle und die Abtriebswelle des Übertragungsgetriebes parallel zueinander.

Bekannt ist eine erste Ausführungsform eines solchen Schweißautomaten, bei der der Antriebsmotor und das Übertragungsgetriebe parallel zueinander angeordnet sind und vorzugsweise mit geringem Abstand nebeneinander verlaufen. Somit ist die Rotationswelle des Motorankers seitlich neben der Antriebswelle und der Abtriebswelle des Übertragungsgetriebes angeordnet. Die Enden der überstehenden Rotationswelle und der vorstehenden Antriebswelle tragen beispielsweise Riemenscheiben, über die ein Keilriemen die Rotationswelle kraftschlüssig mit der Antriebswelle verbindet.

Bekannt ist außerdem eine zweite Ausführungsform eines solchen Schweißautomaten, bei der der Antriebsmotor und das Übertragungsgetriebe in Reihe koaxial angeordnet sind und vorzugsweise direkt aneinander anschließen. Somit sind die Rotationswelle des Motorankers sowie die Antriebswelle und die Abtriebswelle des Übertragungsgetriebes fluchtend miteinander angeordnet. Die zueinander weisenden Enden der überstehenden Rotationswelle und der vorstehenden Antriebswelle sind durch geeignete Kopplungsmittel kraftschlüssig miteinander verbunden.

Bei den zwei vorstehend beschriebenen Ausführungsformen eines Schweißautomaten wird jeweils zuerst die Drehzahl des elektrischen Antriebsmotors über das Übertragungsgetriebe reduziert und anschließend die Drehbewegung der Abtriebswelle mittels Gliederketten auf die drehbar gelagerte Spannarmachse und auf eine unterhalb der Spannarmachse angeordnete im Rahmengestell drehbar aufgenommene Anschlussdrehwelle über vorgesehene Stirnräder übertragen, von der aus die Drehbewegung weiter an die Rollendrehachse der unteren Anpress-/Vorschubrolle weitergeleitet wird. Beide Ausführungsformen haben gemein, dass die Abtriebswelle des Übertragungsgetriebes in der üblichen Gebrauchslage des jeweiligen Schweißautomaten vertikal oberhalb der Spannarmachse angeordnet ist. Dies hat sich als ungünstig erwiesen, wenn die Drehbewegung der Abtriebswelle bei kleinen Drehzahlen und hohem Drehmoment auf die Spannarmachse und die Anschlussdrehwelle übertragen werden muss.

Zum technologischen Hintergrund der Erfindung wird auf die Druckschriften DE 88 05 783 U1, DE 77 00 687 U1, DE 85 29 090 U1 und US 2014/227044 A1 verwiesen.

Die DE 88 05 783 U1 offenbart eine Vorrichtung zum Verschweißen von sich am Rand überlappenden Kunststofffolien mit einer Heizeinrichtung zum Erwärmen der miteinander zu verbindenden Folienteil und einem zum Erzeugen des Schweißdruckes dienenden Druckrollenpaar, von dem eine der Druckrollen auf einem mit einem Federmechanismus zusammenwirkenden Träger gelagert ist, der zur Veränderung der Spalthöhe zwischen den Druckrollen relativ zur anderen starr gelagerten Druckrolle bewegbar ist, wobei dem Träger eine sich am Federmechanismus abstützende Andruckeinrichtung zugeordnet ist, die einen ersten Stellmechanismus zur Grundeinstellung der Spalthöhe bei entspanntem Federmechanismus und einen auf dem ersten Stellmechanismus angeordneten und durch ihn mitbewegbaren zweiten Stellmechanismus zur Einstellung des Schweißdruckes aufweist. Die Stellmechanismen enthalten je einen Exzenter als Stellglied, von denen einer als hohle Exzenterwelle ausgebildet ist, in der eine, mit dem anderen Exzenter verbundene Stellwelle gelagert ist, wobei die Exzenterwelle für radiale Einstellungen lösbar befestigt und mit einem Flansch drehfest verbunden ist, der an der äußeren Stirnseite eine kreisförmig angeordnete Verzahnung aufweist, und die Stellwelle an einem Ende einen schwenkbaren Hebel trägt, der eine in eine der Zahnlücken federnd einrastbare Sperrnase

Die DE 77 00 687 U1 lehrt eine Vorrichtung zum kontinuierlichen Verschweißen von sich am Band überlappenden Bahnen aus thermoplastischem Kunststoff, die eine Führung zum Distanzieren und Zusammenführen der zu verschweißenden Bahnränder und eine Heizeinrichtung zum Plastifizieren der Bahnränder aufweist, welche von der Längsseite eines Gehäuses herauskragend zwischen die in Abstand gehaltenen Bahnränder geführt ist, und bei der im Anschluss an die Heizeinrichtung ein Druckrollenpaar an der Längsseite des Gehäuses angeordnet ist, wobei eine Druckrolle starr und die andere gegen Federkraft verschiebbar gelagert und mindestens eine Druckrolle durch einen Motor angetrieben ist , wobei die Heizeinrichtung als Kontaktschweißkufe ausgebildet ist und einen Teil der Führungseinrichtung bildet. Dabei ist vorzugsweise dem Druckrollenpaar ein weiteres Druckrollenpaar nachgeschaltet und mindestens eine Druckrolle des Druckrollenpaares gemeinsam durch einen Getriebemotor, insbesondere über Ketten oder Zahnräder angetrieben, wobei die unteren Druckrollen auf einer Traverse gelagert sind.

Die DE 85 29 090 U1 offenbart eine Schweißvorrichtung für sich am Rand überlappende Folienbahnen, mit einem die Schweißwerkzeuge enthaltenden Schweißgerät und einem Fahrgestell, die lösbar miteinander verbunden sind, wobei das Schweißgerät auf dem Fahrgestell höheneinstellbar angeordnet ist und das Schweißgerät mit Stützschrauben auf dem Fahrgestell gehalten ist und wobei das Fahrgestell von einem Rahmen und vier Laufrollen gebildet ist und wenigstens eine Laufrolle antreibbar ist.

Die US 2014/227044 A1 lehrt eine Geomembranauskleidung für ein Einschließungssystem, umfassend mindestens erste und zweite Auskleidungsplatte mit überlappenden Kanten, die aneinander befestigt sind, wobei mindestens die erste Auskleidungsplatte eine leitende Unterseite aufweist, wobei die erste Auskleidungsplattenkante auf der Oberseite der zweiten Auskleidungsplattenkante entlang einer ersten Linie versiegelt ist und die erste Auskleidungsplatte über die erste Linie nichtleitend ist. Dabei ist die erste Auskleidungsplattenkante vorzugsweise auf der Oberseite der zweiten Auskleidungsplattenkante entlang einer zweiten, von der ersten Linie beabstandeten Linie abgedichtet, wobei die erste Auskleidungsplatte über die zweite Linie nichtleitend ist.

Ausgehend von dem vorstehend beschrieben Stand der Technik liegt der Erfindung die Aufgabe zugrunde, eine Möglichkeit vorzuschlagen, die Drehbewegung der Abtriebswelle auch bei kleinen Drehzahlen und hohem Drehmoment effektiver auf die Spannarmachse und die Anschlussdrehwelle zu übertragen und somit die vorstehend genannten Nachteile des Standes der Technik auszuräumen.

Diese Aufgabe wird erfindungsgemäß durch eine Antriebsanordnung zum Antrieb eines Schweißautomaten mit den Merkmalen des unabhängigen Anspruchs 1 gelöst. Weitere bevorzugte Ausführungsformen sind den rückbezogenen Ansprüchen zu entnehmen.

Kerngedanke der Erfindung ist es, ein neues Konzept zu entwickeln, bei welchem die Untersetzung der Motordrehzahl des Antriebsmotors mittels des Übertragungsgetriebes näher an der Spannarmachse und der Anschlussdrehwelle des Rahmengestells erfolgt.

Bei der erfindungsgemäßen Antriebsanordnung zum Antrieb eines Schweißautomaten erstrecken sich die Rotationswelle des Motorankers und die Abtriebswelle des Übertragungsgetriebes nebeneinander seitlich versetzt zueinander mit Abstand, wobei zumindest die Abtriebswelle auf Höhe der Spannarmachse des Spannarmes angeordnet ist. In der üblichen Gebrauchslage des Schweißautomaten ist demzufolge die Abtriebswelle in gleicher horizontaler Höhe wie die Spannarmachse angeordnet. Vorzugsweise verlaufen dabei die Rotationswelle des Motorankers und die Abtriebswelle des Übertragungsgetriebes horizontal nebeneinander. Somit befinden sich bevorzugt die Rotationswelle des Motorankers und die Antriebswelle sowie die Abtriebswelle des Übertragungsgetriebes mit der Spannarmachse auf gleicher Höhe gegenüber einer von den zwei Fahrrollen für das Rahmengestell aufgespannten Ebene. Mit anderen Worten sind erfindungsgemäß die Rotationswelle des Motorankers und die Abtriebswelle des Übertragungsgetriebes nicht koaxial angeordnet. Dies bedingt zudem, dass bei der erfindungsgemäßen Antriebsordnung zumindest die Rollendrehachse der unteren Anpress-/Vorschubrolle außerhalb der von der Rotationswelle des Motorankers und zumindest der Antriebswelle des Übertragungsgetriebes aufgespannten Ebene angeordnet ist. Vorzugsweise gilt dies nicht nur für die Antriebswelle sondern auch für die Abtriebswelle des Übertragungsgetriebes. Daraus resultiert eine kompakte Bauform für den Schweißautomaten, indem die Abtriebswelle des Übertragungsgetriebes besonders nahe oder direkt in der Spannarmachse liegt.

In einer bevorzugten Ausführungsform der erfindungsgemäßen Antriebsanordnung erstrecken sich die Rotationswelle des Motorankers und zumindest die Abtriebswelle des Übertragungsgetriebes in einer Ebene, die sich parallel zu der von den wenigstens zwei Fahrrollen aufgespannten Ebene erstreckt.

In einer begünstigten Ausführungsform der Erfindung ist zudem die Abtriebswelle des Übertragungsgetriebes koaxial zu der Spannarmachse angeordnet ist. Dies ermöglicht eine besonders einfache drehfeste Verbindung zwischen der Abtriebswelle und der Spannarmachse des Spannarms. Dabei ist die Abtriebswelle des Übertragungsgetriebes günstigerweise fluchtend mit der Spannarmachse angeordnet.

Bei einer Ausführungsform der erfindungsgemäßen Antriebsanordnung weist die Abtriebswelle des Übertragungsgetriebes vorteilhafterweise eine Wellenverlängerung auf, die die Spannarmachse bildet. Die Wellenverlängerung ist an die Abtriebswelle angeformt und somit integraler Bestandteil der Abtriebswelle. Somit kann auf eine separate Spannarmachse verzichtet werden, was sich günstig auf die Montagearbeiten auswirkt.

Bei einer bevorzugten Variante der Erfindung weist der Motoranker eine Rotationswelle auf, die abtriebsseitig über ein Motorgehäuse des Antriebsmotors vorsteht, wobei ein überstehendes Ende der Rotationswelle des Antriebsmotors und ein über ein Getriebegehäuse überstehendes Ende der Antriebswelle des Übertragungsgetriebes je eine Riemenscheibe aufweisen, die in einer Ebene nebeneinander angeordnet und mit einem Antriebsriemen verbunden sind.

Bei einer weiteren vorteilhaften Variante der erfindungsgemäßen Antriebsanordnung ist die untere Anpress-/Vorschubrolle und/oder die obere Anpress-/Vorschubrolle über ein Antriebszwischengetriebe, beispielsweise über Anschlussdrehwelle mit der Abtriebswelle des Übertragungsgetriebes oder der Wellenverlängerung der Abtriebswelle des Übertragungsgetriebes verbunden.

Der erfindungsgemäße Schweißautomat zum randseitigen Verbinden von Dichtungsbahnen aus thermoplastischen Materialien, mit mindestens einer Anpress-/Vorschubrolle, einem elektrischen Antriebsmotor für die Anpress-/Vorschubrolle und einem dem Antriebsmotor nachgeschalten Übertragungsgetriebe, wobei die Anpress-/Vorschubrolle um eine Rollendrehachse drehbar an einem Spannarm des Schweißautomaten angeordnet und der Spannarm um eine Spannarmachse schwenkbar an einem von Fahrrollen getragenen Rahmengestell des Schweißautomaten gelagert ist, weist eine Antriebsanordnung wie vorstehend beschreiben auf. Der erfindungsgemäße Schweißautomat weist in einer vorteilhaften Ausführungsform zweckmäßigerweise mindestens zwei einander vertikal gegenüberliegende Anpress-/Vorschubrollen auf, wobei zumindest eine obere Anpress-/Vorschubrolle um eine obere Rollendrehachse drehbar an einem Spannarm des Schweißautomaten und eine untere Anpress-/Vorschubrolle um eine untere Rollendrehachse drehbar an einem Rahmengestell des Schweißautomaten angeordnet ist.

Die Vorteile der Erfindung bestehen darin, dass eine bisher stark belastete zweireihige Kette im Getriebeturm entfällt, einige Verschleißsteile, beispielsweise Kette und Kettenräder, mit kurzen Lebenszyklen und hohen Beschaffungskosten, durch Verschleißteilen mit langer Lebensdauer und niedrigen Beschaffungskosten ersetzt werden, eine niedrigere Bauhöhe des Schweißautomaten und eine optimale Ausnutzung des Bauraums ermöglicht wird. Die besonders kompakte Bauform ist insbesondere dadurch erreichbar, dass die Abtriebswelle des Getriebes direkt in der Achse des Spannarms montiert werden.

Nachfolgend wird die Erfindung an Hand eines in der Zeichnung dargestellten Ausführungsbeispiels näher erläutert. Weitere Merkmale der Erfindung ergeben sich aus der folgenden Beschreibung der Ausführungsbeispiele der Erfindung in Verbindung mit den Ansprüchen und den beigefügten Zeichnungen. Es zeigen:
- Figur 1: einen Schweißautomaten mit einer erfindungsgemäßen Antriebsanordnung in perspektivischer Darstellung, mit Blick auf die beim Schweißen in Fahrrichtung linke und hintere Seite des Schweißautomaten;
- Figur 2: den Schweißautomaten aus Figur 1 in perspektivischer Darstellung, mit Blick auf die beim Schweißen in Fahrrichtung rechte und hintere Seite des Schweißautomaten;
- Figur 3: den Schweißautomaten aus Figur 1 in perspektivischer Darstellung, mit Blick auf die beim Schweißen in Fahrrichtung linke und vordere Seite des Schweißautomaten; und
- Figur 4: den Schweißautomaten aus Figur 1 in Seitenansicht, mit Blick auf die beim Schweißen in Fahrrichtung linke Seite des Schweißautomaten.

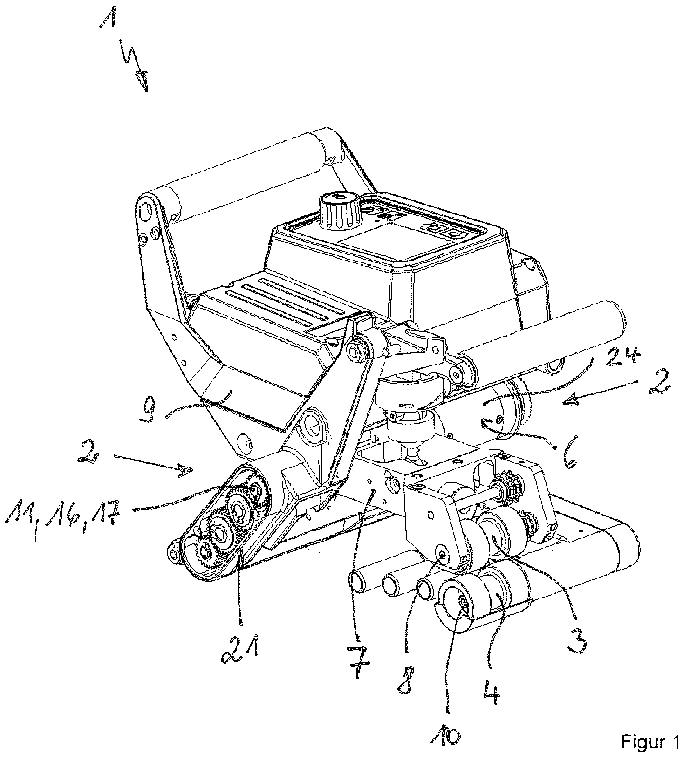

Die Figuren 1 bis 4 zeigen in schematischer Darstellung einen erfindungsgemäßen Schweißautomaten 1 mit einer erfindungsgemäßen Antriebsanordnung 2 zum Antrieb des Schweißautomaten 1, der für ein randseitiges Verbinden von in den Figuren nicht dargestellten Dichtungsbahnen ausgebildet ist. Der Schweißautomat 1 weist zwei einander vertikal gegenüberliegende Anpress-/Vorschubrollen 3, 4, einen elektrischen Antriebsmotor 5 für mindestens eine der Anpress-/Vorschubrollen 3, 4 und ein dem Antriebsmotor 5 nachgeschaltes Übertragungsgetriebe 6 auf, wobei an einem Spannarm 7 des Schweißautomaten 1 eine obere Anpress-/Vorschubrolle 3 um eine obere Rollendrehachse 8 und an einem Rahmengestell 9 des Schweißautomaten 1 eine untere Anpress-/Vorschubrolle 4 um eine untere Rollendrehachse 10 jeweils drehbar angeordnet ist.

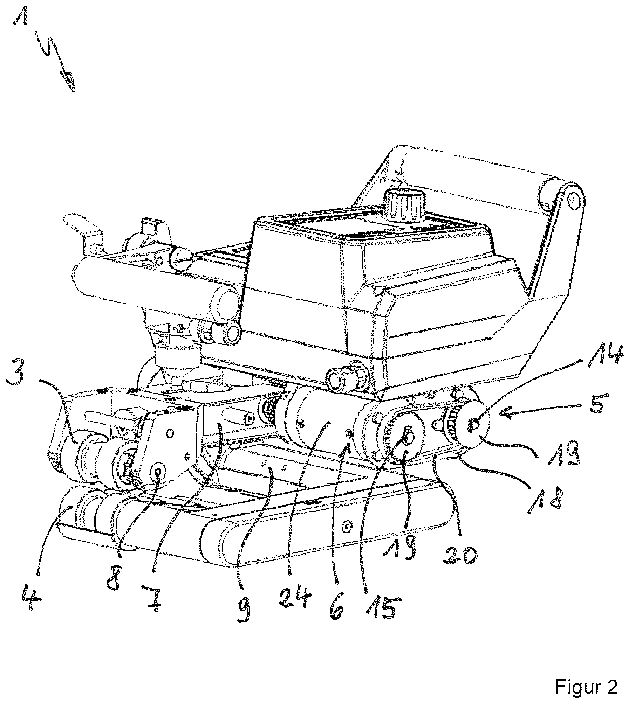

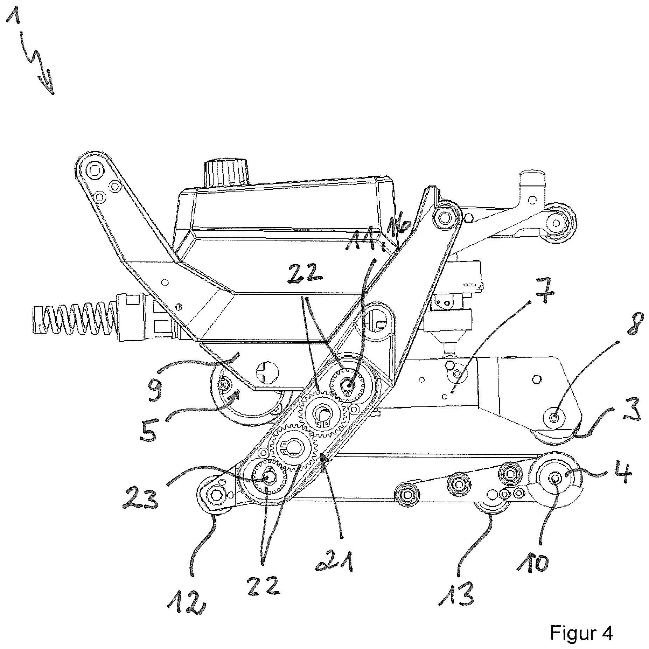

Dabei ist der Spannarm 7 um eine Spannarmachse 11 schwenkbar an dem Rahmengestell 9 des Schweißautomaten 1 gelagert. Das Rahmengestell 9 selbst ist von zwei länglich ausgebildeten Fahrrollen 12, 13 (Fig. 4) getragen, wobei die Fahrrolle 12 in Fahrrichtung des Schweißautomaten 1 vorne und die Fahrrolle 13 in Fahrrichtung des Schweißautomaten 1 hinten angeordnet ist. Der Antriebsmotor 5 und das Übertragungsgetriebe 6 sind starr an dem Rahmengestell 9 befestigt, wobei der Antriebsmotor 5 einen um eine überstehende Rotationswelle 14 rotierenden in den Figuren nicht sichtbaren Motoranker und das Übertragungsgetriebe 6 eine drehbare vorstehende Antriebswelle 15 sowie eine drehbare vorstehende Abtriebswelle 16 aufweist. Die Rotationswelle 14 und die Antriebswelle 15 sind in der Figur 2 zu erkennen, die Abtriebswelle 16 in den Figuren 1, 3 und 4.

Die Spannarmachse 11, die Rollendrehachsen 8 und 10, die Rotationswelle 14, die Antriebswelle 15 und die Abtriebswelle 16 sind parallel zueinander angeordnet, wobei die Rotationswelle 14 des Motorankers des Antriebsmotors 5 und die Abtriebswelle 16 des Übertragungsgetriebes 6 sich nebeneinander seitlich versetzt zueinander erstrecken. Dabei erstreckt sich die Abtriebswelle 15 des Übertragungsgetriebe 6 vertikal auf Höhe der Spannarmachse 11 des Spannarmes 7, in der in den Figuren 1 bis 4 gezeigten üblichen Gebrauchslage des Schweißautomaten 1. In dieser Gebrauchslage verlaufen die Rotationswelle 14 des Antriebsmotors 5 und die Abtriebswelle 16 des Übertragungsgetriebes 6 horizontal nebeneinander. In dem abgebildeten Ausführungsbeispiel befinden sich die Rotationswelle 14 des Antriebsmotors 5 und die Antriebswelle 15 sowie die Abtriebswelle 16 des Übertragungsgetriebes 6 mit der Spannarmachse 11 auf gleicher Höhe gegenüber einer von den zwei Fahrrollen 12, 13 des Rahmengestells 9 aufgespannten Ebene. Somit sind die Rotationswelle 14 und die Abtriebswelle 16 des Übertragungsgetriebes 6 nicht koaxial angeordnet. Demzufolge ist bei der erfindungsgemäßen Antriebsordnung 2 die untere Rollendrehachse 10 der unteren Anpress-/Vorschubrolle 4 außerhalb der von der Rotationswelle 14 des Motorankers des Antriebsmotors 5 und der Antriebswelle 15 des Übertragungsgetriebes 6 aufgespannten Ebene angeordnet. Zudem ist in dem dargestellten Ausführungsbeispiel bei der Antriebsordnung 2 auch die obere Rollendrehachse 8 der oberen Anpress-/Vorschubrolle 3 außerhalb der von der Rotationswelle 14 des Motorankers des Antriebsmotors 5 und der Antriebswelle 15 des Übertragungsgetriebes 6 aufgespannten Ebene angeordnet. Dabei erstreckt sich die von der Rotationswelle 14 des Antriebsmotors 5 und der Antriebswelle 15 des Übertragungsgetriebes 6 aufgespannten Ebene oberhalb der Rollendrehachsen 8, 10 der Anpress-/Vorschubrollen 3, 4 und auch oberhalb der jeweiligen oberen bzw. unteren Anpress-/Vorschubrolle 3 bzw. 4.

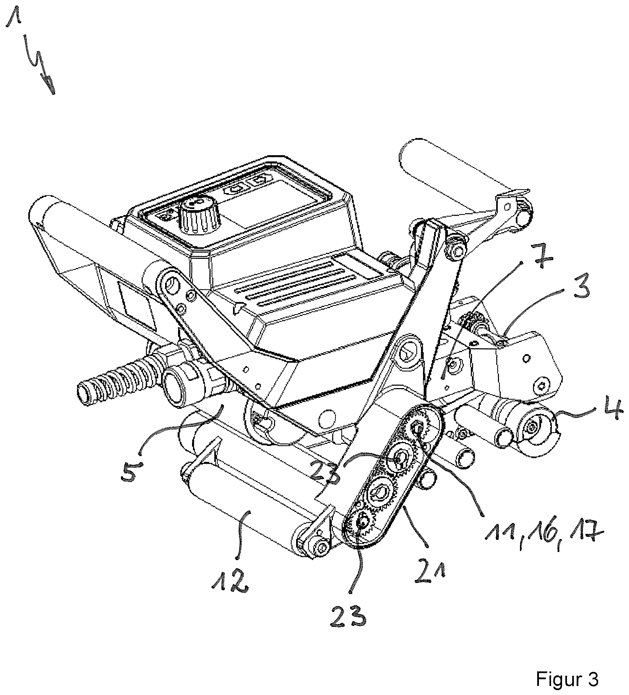

Bei der gezeigten Antriebsanordnung 2 erstrecken sich die Rotationswelle 14 des Motorankers des Antriebsmotors 5 und zumindest die Abtriebswelle 16 des Übertragungsgetriebes 6 in einer Ebene, die parallel zu der von den wenigstens zwei Fahrrollen 12, 13 aufgespannten Ebene verläuft. In der veranschaulichten bevorzugten Ausführungsform der Erfindung ist zudem die Abtriebswelle 16 des Übertragungsgetriebes 6 koaxial zu der Spannarmachse 11 des Spannarms 7 angeordnet und erstreckt sich dabei günstigerweise fluchtend mit der Spannarmachse 11. Die Abtriebswelle 16 und die Spannarmachse 11 des Spannarms 7 sind direkt miteinander drehfest gekoppelt. Dazu weist die Abtriebswelle 16 des Übertragungsgetriebes 6 eine in den Figuren 1, 3 sichtbare Wellenverlängerung 17 auf, die an die Abtriebswelle 16 angeformt ist und die Spannarmachse 11 bildet.

Wie der Figur 2 entnehmbar ist, weist der Motoranker des Antriebsmotors 5 eine Rotationswelle 14 auf, die abtriebsseitig über ein Motorgehäuse 18 des Antriebsmotors 5 vorsteht, wobei ein überstehendes Ende der Rotationswelle 14 des Antriebsmotors 5 und ein über ein Getriebegehäuse 24 überstehendes Ende der Antriebswelle 15 des Übertragungsgetriebes 6 je eine Riemenscheibe 19 aufweisen, die in einer Ebene nebeneinander angeordnet und mit einem Antriebsriemen 20 kraftschlüssig verbunden sind.

Wie die Figuren 1, 3, 4 verdeutlichen ist bei der gezeigten Antriebsanordnung 2 die untere Anpress-/Vorschubrolle 4 und die obere Anpress-/Vorschubrolle 3 über ein Antriebszwischengetriebe 21 verbunden, das eingangsseitig mit der Spannarmachse 11 oder der verlängerten Abtriebswelle 16 verbunden ist. Das Antriebszwischengetriebe 21 ist ein Zahnradgetriebe, wobei zwei Zahnräder 22 des Zwischengetriebes 21 jeweils von einer Anschlussdrehwelle 23 getragen sind, von denen aus die Drehbewegung der Abtriebswelle 16 des Übertragungsgetriebes 6 an die obere Rollendrehachse 8 der oberen Anpress-/Vorschubrolle 3 bzw. an die untere Rollendrehachse 10 der unteren Anpress-/Vorschubrolle 4 durch in den Figuren nicht sichtbaren Übertragungsmitteln weitergeleitet wird.

## Patentansprüche

1. Antriebsanordnung (2) zum Antrieb eines Schweißautomaten (1), der für ein randseitiges Verbinden von Dichtungsbahnen ausgebildet ist, wobei der Schweißautomat (1) mindestens zwei einander vertikal gegenüberliegende Anpress-/Vorschubrollen (3, 4), einen elektrischen Antriebsmotor (5) für mindestens eine der Anpress-/Vorschubrollen (3, 4) und ein dem Antriebsmotor (5) nachgeschaltetes Übertragungsgetriebe (6) aufweist, und eine obere Anpress-/Vorschubrolle (3) um eine obere Rollendrehachse (8) drehbar an einem Spannarm (7) des Schweißautomaten (1) und eine untere Anpress-/Vorschubrolle (4) um eine untere Rollendrehachse (10) drehbar an einem Rahmengestell (9) des Schweißautomaten (1) angeordnet ist, wobei der Spannarm (7) um eine Spannarmachse (11) schwenkbar an dem Rahmengestell (9) des Schweißautomaten gelagert ist, und das Rahmengestell von mindestens zwei Fahrrollen (12, 13) getragen ist, der Antriebsmotor (5) und das Übertragungsgetriebe (6) starr an dem Rahmengestell (9) befestigt sind, wobei der Antriebsmotor (5) einen um eine überstehende Rotationswelle (14) rotierenden Motoranker aufweist und das Übertragungsgetriebe (6) eine drehbare vorstehende Antriebswelle (15) sowie eine drehbare vorstehende Abtriebswelle (16) aufweist, und wobei die Spannarmachse (11), die Rollendrehachsen (8, 10), die Rotationswelle (14), die Antriebswelle (15) und die Abtriebswelle (16) parallel zueinander angeordnet sind, **dadurch gekennzeichnet, dass** die Rotationswelle (14) des Motorankers und die Abtriebswelle (16) des Übertragungsgetriebes (6) sich nebeneinander seitlich versetzt zueinander erstrecken, wobei zumindest die Abtriebswelle (16) auf Höhe der Spannarmachse (11) des Spannarmes (7) angeordnet ist.

2. Antriebsanordnung nach Anspruch 1, **dadurch gekennzeichnet, dass** Rotationswelle (14) des Motorankers und zumindest die Abtriebswelle (16) des Übertragungsgetriebes (6) in einer Ebene angeordnet sind, die sich parallel zu der von den wenigstens zwei Fahrrollen (12, 13) aufgespannten Ebene erstreckt.

3. Antriebsanordnung nach Anspruch 1 oder 2, **dadurch gekennzeichnet, dass** die Abtriebswelle (16) des Übertragungsgetriebes (6) koaxial zu der Spannarmachse (11) angeordnet ist.

4. Antriebsanordnung nach Anspruch 3, **dadurch gekennzeichnet, dass** die Abtriebswelle (16) des Übertragungsgetriebes (6) fluchtend mit der Spannarmachse (11) angeordnet ist.

5. Antriebsanordnung nach Anspruch 3 oder 4, **dadurch gekennzeichnet, dass** die Abtriebswelle (16) des Übertragungsgetriebes (6) eine Wellenverlängerung (17) aufweist, die die Spannarmachse (11) bildet.

6. Antriebsanordnung nach einem der vorstehenden Ansprüche, **dadurch gekennzeichnet, dass** der Motoranker eine Rotationswelle (14) aufweist, die abtriebsseitig über ein Motorgehäuse (18) des Antriebsmotors (5) vorsteht, wobei ein überstehendes Ende der Rotationswelle (14) des Antriebsmotors (5) und ein über ein Getriebegehäuse (24) überstehendes Ende der Antriebswelle (15) des Übertragungsgetriebes (6) je eine Riemenscheibe (19) aufweisen, die in einer Ebene nebeneinander angeordnet und mit einem Antriebsriemen (20) verbunden sind.

7. Antriebsanordnung nach einem der vorstehenden Ansprüche, **dadurch gekennzeichnet, dass** die untere Anpress-/Vorschubrolle (4) und/oder die obere Anpress-/Vorschubrolle (3) über ein Antriebszwischengetriebe (21) mit der Abtriebswelle (16) des Übertragungsgetriebes (6) oder der Wellenverlängerung (17) der Abtriebswelle (16) des Übertragungsgetriebes (6) verbunden sind.

8. Schweißautomat (1) zum randseitigen Verbinden von Dichtungsbahnen aus thermoplastischen Materialien, mit mindestens einer Anpress-/Vorschubrolle (3, 4), einem elektrischen Antriebsmotor (5) für die Anpress-/Vorschubrolle (3, 4) und einem dem Antriebsmotor (5) nachgeschalten Übertragungsgetriebe (6), wobei eine Anpress-/Vorschubrolle (3) um eine Rollendrehachse (8) drehbar an einem Spannarm (7) des Schweißautomaten (1) angeordnet und der Spannarm (7) um eine Spannarmachse (11) schwenkbar an einem von Fahrrollen (12, 13) getragenen Rahmengestell (9) des Schweißautomaten (1) gelagert ist, **gekennzeichnet durch** eine Antriebsanordnung (2) nach einem der vorstehenden Ansprüche 1 bis 7.

## Claims

1. A drive system (2) for driving an automatic welding machine (1) designed to join the edges of sealing sheets, the automatic welding machine (1) comprising at least two pressing/advancing rollers (3, 4) located vertically opposite one another, an electric drive motor (5) for at least one of the pressing/advancing rollers (3, 4) and a transmission gear mechanism (6) connected downstream of the drive motor (5), an upper pressing/advancing roller (3) being disposed rotatably about an upper roller rotational axis (8) on a tensioning arm (7) of the automatic welding machine (1) and a lower pressing/advancing roller (4) being disposed rotatably about a lower roller rotational axis (10) on a frame (9) of the automatic welding machine (1), the tensioning arm (7) being mounted pivotably about a tensioning arm axis (11) on the frame (9) of the automatic welding machine, and the frame being supported by at least two drive rollers (12, 13), the drive motor (5) and the transmission gear mechanism (6) being rigidly attached to the frame (9), the drive motor (5) comprising a motor armature rotating about a protruding rotational shaft (14), and the transmission gear mechanism (6) comprising a rotatable protruding input shaft (15) and a rotatable protruding output shaft (16), and the tensioning arm axis (11), the roller rotational axes (8, 10), the rotational shaft (14), the input shaft (15) and the output shaft (16) being disposed parallel to one another, **characterized in that** the rotational shaft (14) of the motor armature and the output shaft (16) of the transmission gear mechanism (6) extend next to, and laterally offset from, one another, wherein at least the output shaft (16) is disposed at the level of the tensioning arm axis (11) of the tensioning arm (7).

2. The drive system according to claim 1, **characterized in that** the rotational shaft (14) of the motor armature and at least the output shaft (16) of the transmission gear mechanism (6) are disposed in a plane that is parallel to the plane spanned by the at least two drive rollers (12, 13).

3. The drive system according to claim 1 or 2, **characterized in that** the output shaft (16) of the transmission gear mechanism (6) is disposed coaxially with respect to the tensioning arm axis (11).

4. The drive system according to claim 3, **characterized in that** the output shaft (16) of the transmission gear mechanism (6) is disposed aligned with the tensioning arm axis (11).

5. The drive system according to claim 3 or 4, **characterized in that** the output shaft (16) of the transmission gear mechanism (6) comprises a shaft extension (17) that forms the tensioning arm axis (11).

6. A drive system according to any one of the preceding claims, **characterized in that** the motor armature comprises a rotational shaft (14), which protrudes over a motor housing (18) of the drive motor (5) on the output side, wherein a protruding end of the rotational shaft (14) of the drive motor (5) and an end of the input shaft (15) of the transmission gear mechanism (6) protruding over a gear mechanism housing (24) each comprise a pulley (19), the pulleys being disposed next to one another in a plane and connected to a drive belt (20).

7. A drive system according to any one of the preceding claims, **characterized in that** the lower pressing/advancing roller (4) and/or the upper pressing/advancing roller (3) are connected via a drive intermediate gear mechanism (21) to the output shaft (16) of the transmission gear mechanism (6) or the shaft extension (17) of the output shaft (16) of the transmission gear mechanism (6).

8. An automatic welding machine (1) for joining the edges of sealing sheets made of thermoplastic materials, comprising at least one pressing/advancing roller (3, 4), an electric drive motor (5) for the pressing/advancing (3, 4) roller, and a transmission gear mechanism (6) connected downstream of the drive motor (5), a pressing/advancing roller (3) being disposed rotatably about a roller rotational axis (8) on a tensioning arm (7) of the automatic welding machine (1), and the tensioning arm (7) being mounted pivotably about a tensioning arm axis (11) on a frame (9) of the automatic welding machine (1) supported by drive rollers (12, 13), **characterized by** a drive system (2) according to any one of preceding claims 1 to 7.

## Revendications

1. Dispositif d'entraînement (2) pour l'entraînement d'une machine de soudage automatique (1) conçue pour assembler des bandes d'étanchéité au niveau des bords, la machine de soudage automatique (1) présentant au moins deux rouleaux de pression/d'avance (3, 4) se faisant face verticalement, un moteur d'entraînement électrique (5) pour au moins un des rouleaux de pression/d'avance (3, 4) et un mécanisme de transmission (6) monté en aval du moteur d'entraînement (5), et un rouleau de pression/d'avance supérieur (3) est disposé sur un bras de serrage (7) de la machine de soudage automatique (1) de manière à pouvoir tourner autour d'un axe de rotation de rouleau supérieur (8) et un rouleau de pression/d'avance inférieur (4) est disposé sur un châssis (9) de la machine de soudage automatique (1) de manière à pouvoir tourner autour d'un axe de rotation de rouleau inférieur (10), le bras de serrage (7) étant monté sur le châssis (9) de la machine de soudage automatique de manière à pouvoir pivoter autour d'un axe de bras de serrage (11), et le châssis étant porté par au moins deux rouleaux de déplacement (12, 13), le moteur d'entraînement (5) et le mécanisme de transmission (6) étant fixés de manière rigide au châssis (9), le moteur d'entraînement (5) présentant un induit de moteur tournant autour d'un arbre de rotation en saillie (14), et le mécanisme de transmission (6) présentant un arbre d'entraînement en saillie tournant (15) ainsi qu'un arbre de sortie en saillie tournant (16), et l'axe de bras de serrage (11), les axes de rotation des rouleaux (8, 10), l'arbre de rotation (14), l'arbre d'entraînement (15) et l'arbre de sortie (16) étant disposés parallèlement les uns aux autres,
**caractérisé en ce que** l'arbre de rotation (14) de l'induit de moteur et l'arbre de sortie (16) du mécanisme de transmission (6) s'étendent l'un à côté de l'autre de manière décalée latéralement l'un par rapport à l'autre, au moins l'arbre de sortie (16) étant disposé à la hauteur de l'axe de bras de serrage (11) du bras de serrage (7).

2. Dispositif d'entraînement selon la revendication 1, **caractérisé en ce que** l'arbre de rotation (14) de l'induit de moteur et au moins l'arbre de sortie (16) du mécanisme de transmission (6) sont disposés dans un plan qui s'étend parallèlement au plan défini par lesdits au moins deux rouleaux de déplacement (12, 13).

3. Dispositif d'entraînement selon la revendication 1 ou 2, **caractérisé en ce que** l'arbre de sortie (16) du mécanisme de transmission (6) est disposé coaxialement à l'axe de bras de serrage (11).

4. Dispositif d'entraînement selon la revendication 3, **caractérisé en ce que** l'arbre de sortie (16) du mécanisme de transmission (6) est disposé en alignement avec l'axe de bras de serrage (11).

5. Dispositif d'entraînement selon la revendication 3 ou 4, **caractérisé en ce que** l'arbre de sortie (16) du mécanisme de transmission (6) présente un prolongement d'arbre (17) qui forme l'axe de bras de serrage (11).

6. Dispositif d'entraînement selon l'une des revendications précédentes, **caractérisé en ce que** l'induit de moteur présente un arbre de rotation (14) qui fait saillie côté sortie d'un carter de moteur (18) du moteur d'entraînement (5), une extrémité en saillie de l'arbre de rotation (14) du moteur d'entraînement (5) et une extrémité de l'arbre d'entraînement (15) du mécanisme de transmission (6) en saillie d'un carter de transmission (24) présentant chacune une poulie de courroie (19) qui sont disposées côte à côte dans un plan et reliées à une courroie d'entraînement (20).

7. Dispositif d'entraînement selon l'une des revendications précédentes, **caractérisé en ce que** le rouleau de pression/d'avance inférieur (4) et/ou le rouleau de pression/d'avance supérieur (3) sont reliés par l'intermédiaire d'un mécanisme d'entraînement intermédiaire (21) à l'arbre de sortie (16) du mécanisme de transmission (6) ou au prolongement d'arbre (17) de l'arbre de sortie (16) du mécanisme de transmission (6).

8. Machine de soudage automatique (1) pour l'assemblage de bandes d'étanchéité en matière thermoplastique au niveau des bords, comprenant au moins un rouleau de pression/d'avance (3, 4), un moteur d'entraînement électrique (5) pour le rouleau de pression/d'avance (3, 4) et un mécanisme de transmission (6) monté en aval du moteur d'entraînement (5), dans laquelle un rouleau de pression/d'avance (3) est disposé sur un bras de serrage (7) de la machine de soudage automatique (1) de manière à pouvoir tourner autour d'un axe de rotation de rouleau (8), et le bras de serrage (7) est monté sur un châssis (9) de la machine de soudage automatique (1) porté par des rouleaux de déplacement (12, 13) de manière à pouvoir pivoter autour d'un axe de bras de serrage (11), **caractérisée par** un dispositif d'entraînement (2) selon l'une des revendications 1 à 7 précédentes.
